# EUROPÄISCHE PATENTSCHRIFT

(11) **EP 3 372 338 B1**
(45) Veröffentlichungstag und Bekanntmachung des Hinweises auf die Patenterteilung: **16.10.2019**
(21) Anmeldenummer: 18159164.5
(22) Anmeldetag: 28.02.2018
(51) Int. Cl.: B23Q 3/155, B23Q 17/24

(54) **BEARBEITUNGSVORRICHTUNG FÜR EIN DENTALES WERKSTÜCK**
PROCESSING DEVICE FOR A DENTAL WORKPIECE
DISPOSITIF D'USINAGE POUR UNE PIÈCE DENTAIRE

(30) Priorität: 10.03.2017 AT 501892017
(43) Veröffentlichungstag der Anmeldung: 12.09.2018
(73) Patentinhaber: STEGER, Heinrich, 39031 Bruneck (IT)
(72) Erfinder: STEGER, Heinrich, 39031 Bruneck (IT)
(74) Vertreter: Torggler & Hofinger Patentanwälte

(56) Entgegenhaltungen:
- DE-A1- 19 942 980
- DE-A1-102008 035 305
- JP-A- H06 134 638
- US-A1- 2002 003 415
- US-A1- 2005 222 705

## Beschreibung

Die Erfindung betrifft eine Bearbeitungsvorrichtung für ein, insbesondere dentales, Werkstück, mit zumindest einer Aufnahmevorrichtung für eine Inspektionsvorrichtung oder ein Bearbeitungswerkzeug zum Bearbeiten des, insbesondere dentalen, Werkstücks und einer Erkennungsvorrichtung zum Vermessen und/oder Identifizieren eines in die Aufnahmevorrichtung eingesetzten Bearbeitungswerkzeugs oder der Inspektionsvorrichtung.

Bei der Bearbeitung von dentalen Werkstücken wie beispielsweise Brücken, Inlays, usw. wurde in den letzten Jahren ein immer höherer Automatisierungsgrad erreicht. Vor allem da verschiedene, automatisch oder manuell spannbare Bearbeitungswerkzeuge je nach Art der Bearbeitung eingesetzt werden, ist es bei der automatisierten Bearbeitung wichtig, dass das System selbst weiß, welche Bearbeitungsvorrichtungen gerade eingesetzt werden. Auch die Erkennung von verschiedenen Werkzeugmagazinen ist wichtig. Es ist auch oft notwendig zu erkennen bzw. auszulesen, ob ein Bearbeitungswerkzeug gerade abgelegt ist oder nicht.

Im Speziellen bei Bearbeitungsvorrichtungen in Form von dentalen CNC-Fräsmaschinen mit automatischen Werkzeugwechslern verfügen die Maschinen über ein internes Werkzeuglager, auf das die Maschinen bei Bedarf zugreifen können. So kann bei einem Schruppvorgang ein größeres Werkzeug und anschließend beim Schlichtvorgang ein kleineres Werkzeug verwendet werden. Der Werkzeugwechsel wird dann von der Maschine automatisiert durchgeführt, ohne das Eingreifen eines Technikers. Das anfängliche Bestücken des Werkzeugmagazins erfolgt in den meisten Fällen jedoch manuell durch den Anwender. Gerade dabei kann es passieren, dass zumindest ein Bearbeitungswerkzeug (oder eine Inspektionsvorrichtung) an einer falschen Stelle im Magazin abgelegt wird (beispielsweise an Stelle 2 und nicht an Stelle 1). Im CNC-File der Fräsmaschine ist dann aber zum eigentlich benötigten Bearbeitungswerkzeug die Stelle 1 hinterlegt, wobei sich die Maschine dann auch das Bearbeitungswerkzeug von dieser entsprechenden Stelle holt. Da an dieser Stelle aber fälschlicherweise ein anderes Bearbeitungswerkzeug abgelegt ist, wird der Bearbeitungsvorgang mit dem falschen Werkzeug durchgeführt. Um hier den Faktor Mensch und die dadurch ermöglichten Fehlerquellen zu verringern, soll ein System bereitgestellt werden, das solche Fehler verringert bzw. gänzlich vermeidet.

Dazu ist beispielweise aus der EP 1 674 047 B1 eine zuverlässige Überprüfung oder Erkennung der Werkzeugbestückung und/oder des Typs und des Abnutzungszustandes des eingesetzten Werkzeugs einer Bearbeitungsmaschine für den Rohling bekannt. Vor allem sollen dadurch Fehlbestückungen erkannt werden. Dies wird über Lehren erreicht, wobei über zwei am Rohling angebrachte, als Ausnehmung gestaltete Lehren gleichzeitig auch die Außenkontur des Werkzeugs überprüft werden kann. Nachteilig dabei ist, dass die Automatisierung schwierig ist und die Konturüberprüfung über Lehren aufwändig und ungenau ist. Zudem muss jede Lehre separat angefertigt werden. Ein Bruch des Bearbeitungswerkzeugs kann auch nicht detektiert werden.

Die gattungsfremde EP 1 523 285 B1 zeigt eine Vermessungseinrichtung mit einer Vermessungskamera für eine Vorlage und damit versehene Bearbeitungsmaschine. Durch diese Kamera werden aber nur die Werkstückrohlinge erfasst und gegebenenfalls die Lage des Werkzeugs ermittelt. Es wird keine Identifizierung des Werkzeugs durchgeführt.

Dagegen zeigt die gattungsbildende DE 10 2005 058 881 A1 ein dentalmedizinisches Instrument, wobei dem Instrument Identifikationsmittel zugeordnet sind, welche zur Übertragung instrumentenspezifischer Daten automatisch lesbar sind. Am Instrument selbst ist dazu ein Transponderchip oder ein maschinenlesbarer Code angebracht. Zudem sind in dieser Schrift Detektoreinrichtungen oder Lesegeräte angeführt, mittels derer das Instrument/das Werkzeug identifizierbar ist. Als Beispiel wird ein Laserscanner angeführt. Mittels der Detektoreinrichtung ist es möglich, die Verwendung unpassender dentalmedizinischer oder chirurgischer Instrumente/Werkzeuge zu unterbinden. Nachteilig vor allem bei diesen Laserscannern ist deren teure Anschaffung. Zudem ist es mit einem Laser nicht möglich die Abnützung oder den Bruch eines Werkzeugs zu erkennen.

Auf ähnliche Art und Weise zeigt die DE 201 00 591 U1 ein chirurgisches System, wobei eine Zubehörerkennungseinheit vorgesehen ist, über die Gerätedaten optisch auslesbar sind. Dazu ist vor allem ein in ein Gehäuse integrierter Barcodescanner vorgesehen, über den die Werkzeuge erkannt werden können. Nachteilig bei dieser Barcodeüberwachung ist, dass der Barcode genau in Richtung der Lichtquelle (Laser) gerichtet sein muss, anderenfalls funktioniert diese Erkennung nicht. Dies ist speziell bei den oft kleinen und runden Werkzeugen (vor allem bei Fräsern mit einem Durchmesser unter 10 mm) nachteilig. Viele Werkzeuge sind auch zu klein um einen Barcode oder eine Beschriftung anzubringen. Bei der Verwendung eines Barcodes oder auch bei RFID kann der Zustand des Werkzeugs (verschlissen, gebrochen, neu oder in Ordnung) nicht automatisch erkannt werden.

Weiters betrifft die Erfindung eine Bearbeitungsvorrichtung, bei der die Erkennungsvorrichtung eine optische Kamera aufweist, wie sie zum Beispiel in der DE 199 42 980 A1, der US 2005/0222705 A1 und der US 2002/0003415 A1 gezeigt ist. Dadurch ist es billiger und einfacher möglich, eine eindeutige Identifizierung des verwendeten Bearbeitungswerkzeuges bzw. der Inspektionsvorrichtung zu erreichen als bei teuren Lasern. Vor allem kann das zu bearbeitende Werkstück über die optische Kamera im Detail aufgenommen und gegebenenfalls auch vermessen werden. Die erhaltenen Daten können einer Steuer- oder Regeleinheit zur weiteren Verarbeitung zugeführt werden. Dies stellt eine Alternative zur Möglichkeit dar, dass das Werkzeug nur vor und nach der Bearbeitung auf oberflächliche Veränderungen überprüft wird.

Anders ausgedrückt besteht die Idee darin, eine Erkennungsvorrichtung bereitzustellen, welche in der Lage ist, die Bearbeitungswerkzeuge bzw. Inspektionsvorrichtungen, welche von der Bearbeitungsvorrichtung aufgegriffen werden, über eine optische Einheit zu erkennen. Diese Erkennungsvorrichtung ist in diesem Fall auch in der Bearbeitungsvorrichtung selbst oder in unmittelbarer Umgebung untergebracht, sodass die Aufnahmevorrichtung erreicht werden kann. Ob sich nun diese Erkennungsvorrichtung mitsamt der optischen Kamera zur Aufnahmevorrichtung (samt Bearbeitungswerkzeug) bewegt oder umgekehrt, sei dahingestellt.

Die Aufgabe der vorliegenden Erfindung besteht darin, eine gegenüber dem Stand der Technik verbesserte Bearbeitungsvorrichtung zu schaffen. Insbesondere soll die Erkennung des Bearbeitungswerkzeugs bzw. der Inspektionsvorrichtung einfacher, effizienter und billiger erfolgen können. Zudem soll eine Abnützungserkennung ermöglicht werden. Insbesondere soll im Bildaufnahme-Bereich der Verschmutzungsgrad im Vergleich zu der restlichen Maschine um ein Wesentliches niedriger sein oder sogar komplett vermieden werden.

Dies wird für eine Bearbeitungsvorrichtung mit den Merkmalen von Anspruch 1 erreicht. Demnach ist erfindungsgemäß vorgesehen, dass die Erkennungsvorrichtung über einen vom Werkstück-Bearbeitungsraum abgetrennten Bereich verfügt. Dieser Bereich ist bevorzugt in einem Gehäuse ausgebildet. Die Erfassung des Bearbeitungswerkzeuges erfolgt dann rein in diesem Bildaufnahme-Bereich. In diesem Bereich kann dann auch eine Beleuchtung untergebracht sein. Dadurch kann gewährleistet werden, dass das Bearbeitungswerkzeug immer nahezu identisch ausgeleuchtet wird. Wenn dagegen mit Umgebungslicht gearbeitet werden würde, dann hat man mit reflektiertem Licht Probleme und kann unter Umständen das Bearbeitungswerkzeug nicht richtig auslesen oder man kann sich, im Fall einer Geometrieerkennung, vermessen. Erfindungsgemäß ist auch vorgesehen, dass der abgetrennte Bereich über eine Öffnung verfügt, welche verschlossen ist, wenn kein Fräser (Bearbeitungswerkzeug) in Position zur Erkennung ist. Vor dieser Öffnung verfügt dieser Bereich noch über einen Druckluftausgang, mit dem es möglich ist, den Fräser bereits vor dem Eintauchen vom gröbsten Schmutz zu reinigen. Sollte doch noch Schmutz auf dem Bearbeitungswerkzeug sein und mit in den abgetrennten Bereich getragen werden und sich dort absetzen und Bauteile wie Lichtquelle, Kamera usw. bedecken, kann auch ein Druckluftanschluss im Inneren vorgesehen sein. Dadurch wird ein Überdruck im Inneren erzeugt. Dies hat den Vorteil, dass zu einem kein Schmutz von außen eindringen kann und auch der Schmutz, welcher sich gegebenenfalls im Bildaufnahmeraum ablagert, über einen dünnen Schlitz im unteren Bereich des Gehäuses abgeblasen wird.

Bevorzugt ist vorgesehen, dass als Inspektionsvorrichtung eine Lasermessvorrichtung, ein Kalibriertaster und/oder eine optische Kamera verwendet werden/wird. Mit dieser Inspektionsvorrichtung können Untersuchungen an diversen Elementen der Bearbeitungsvorrichtung vorgenommen werden.

Anstatt oder zusätzlich zur reinen Identifizierung des verwendeten Bearbeitungswerkzeuges ist bevorzugt vorgesehen, dass durch die Erkennungsvorrichtung ein Vermessen des Bearbeitungswerkzeugs oder der Inspektionsvorrichtung erfolgt. Bevorzugt erfolgt dabei ein Abgleich mit hinterlegten Daten. Besonders bevorzugt ist vorgesehen, dass durch das über die Erkennungsvorrichtung durchgeführte Vermessen auch die Abnützung eines Bearbeitungswerkzeugs durch Vergleich eines Bilds des Bearbeitungswerkzeugs zu einer gespeicherten Sollform messbar ist. Im Gegensatz zu Barcodescannern ist durch die Verwendung von optischen Kameras als Teil der Erkennungsvorrichtung eine Doppelfunktion gegeben und somit eine wesentliche Verbesserung gegenüber dem Stand der Technik erreicht.

Prinzipiell sind zwei verschiedene Identifizierungsvarianten über die optische Kamera denkbar. Zum einen ist es möglich, dass auf dem Bearbeitungswerkzeug eindeutige Identifikationsmittel angeordnet, vorzugsweise aufgelasert, sind. Diese Identifikationsmittel können beispielsweise in Form von QR-Codes, bestimmten Mustern, einer Zahlenfolge oder Ähnlichem am Bearbeitungswerkzeug ausgebildet sein. Bevorzugt ist dieses Identifikationsmittel in das Bearbeitungswerkzeug eingelasert. Somit hat jeder Fräser eine eigene ID (Kennung bzw. Identifikator). Dies ermöglicht es, dass jedem einzelnen Bearbeitungswerkzeug ein Verbrauch, Schnittwerte, Standzeiten und weitere Parameter zugeordnet werden. Dadurch kann eine laufende Optimierung der Bearbeitungswerkzeuge erfolgen.

Anders ausgedrückt kann auf dem Bearbeitungswerkzeug, vorzugsweise im Bereich des Schaftes welcher nicht von der Spannzange verdeckt wird, eine Kennzeichnung vorgesehen sein, welche von der optischen Einheit erfasst wird. Die erfassten Daten werden dann über eine Software ausgewertet, um zu identifizieren, ob es sich dabei um das richtige Werkzeug handelt. Dies kann mit einer Seriennummer realisiert werden, welche beispielsweise als 1D oder 2D Strichcode, als QR-Code oder als Datenmatrix vorliegt. Diese Kennzeichnung kann über unterschiedliche Verfahren aufgebracht werden. Günstigerweise erfolgt die Kennzeichnung über einen Laser. Bevorzugt verfügt die Lasergravur über eine Genauigkeit von 0,01 mm. Jedoch sollen andere Verfahren wie Ätzen, Erodieren, Fräsen, Schleifen usw. nicht ausgeschlossen werden. Alternativ zu einer rein geometriebasierenden Kennzeichnung kann auch eine Farbkennzeichnung vorgesehen sein, über welche dann die Werkezuge erkannt werden.

Um die Kennzeichnung auf dem Bearbeitungswerkzeug mit der optischen Kamera aufnehmen zu können, kann es zum einen vorgesehen sein, dass sich die optische Kamera um das Bearbeitungswerkzeug bewegt. Die einfachere Möglichkeit besteht jedoch darin, dass die Aufnahmevorrichtung das Bearbeitungswerkzeug auf eine beliebige Position drehen kann. Bevorzugt beträgt die Auflösung 1°, jedoch ist es auch ausreichend, wenn die Auflösung 30° beträgt. Demnach kann also das Bearbeitungswerkzeug alle 30° von der Aufnahmevorrichtung angefahren werden. Bei dem nun verwendeten System ist die Aufnahmevorrichtung also in der Lage, bestimmte Positionen anzufahren. Somit kann in einem ersten Moment das zu identifizierende Merkmal auch auf der kameraabgewandten Seite angebracht sein. Wenn dies der Fall ist, wird die Aufnahmevorrichtung über die Spindel dann einfach in bestimmten Winkelschritten gedreht und dann bei jeder Stellung zumindest ein Bild aufgenommen, bis das Identifikationsmerkmal sichtbar ist. Sobald dies der Fall ist, kann dann das Bearbeitungswerkzeug ausgelesen werden. Theoretisch ist es möglich die Spindel stufenlos anzufahren.

Zum anderen kann aber auch auf solche aufgebrachte Identifikationsmittel verzichtet werden. Dagegen wird das Bearbeitungswerkzeug (bzw. die Inspektionsvorrichtung) über seine spezifische Geometrie erkannt. Dazu fährt das Bearbeitungswerkzeug in den Sichtbereich der Erkennungsvorrichtung. Im Speziellen wird die Identifikation dadurch erreicht, dass die Erkennungsvorrichtung eine Vergleichsvorrichtung aufweist, in der Sollformen einer Vielzahl von Bearbeitungswerkzeugen und/oder Inspektionsvorrichtungen gespeichert sind. Dabei erfolgt die Identifizierung bevorzugt dadurch, dass durch die optische Kamera zumindest ein Bild eines in die Aufnahmevorrichtung eingesetzten Bearbeitungswerkzeugs aufnehmbar ist und dieses Bild signaltechnisch der Vergleichsvorrichtung zuführbar ist. Anschließend wird von der Vergleichsvorrichtung das aufgenommene Bild mit zumindest einer der Sollformen verglichen, wobei bei Übereinstimmung des aufgenommenen Bildes mit einer Sollform das Bearbeitungswerkzeug durch die Erkennungsvorrichtung eindeutig identifizierbar ist. Somit erkennt das System aufgrund des von der optischen Kamera aufgenommenen Bildes und der Kontur des Bearbeitungswerkzeugs, welches Bearbeitungswerkzeug gerade in die Aufnahmevorrichtung eingesetzt ist.

Anders ausgedrückt: Damit beide Varianten (Erkennung über Identifikationsmittel oder Formerkennung) funktionieren, wird auch die dementsprechende Software benötigt, welche die aufgenommenen Daten speichern und verarbeiten kann, um dann dementsprechende auch die Bearbeitungsmaschine steuern zu können. In der Software können diverse Datensätze von abgelegten Bearbeitungswerkzeugen abgerufen werden, mit denen dann die über die optische Kamera aufgenommenen Daten verglichen werden.

Als Bearbeitungswerkzeug können alle Werkzeuge verstanden werden, welche in der Dentalindustrie verwendet werden, um Zahnersatz herzustellen. Dies inkludiert neben Fräsern, Schleifern, Bohrern, Gewindefräsern, Trennscheiben, usw. auch einen Laser, aufbauende Werkzeuge oder Werkzeuge in Form einer Färbevorrichtung um einen Zahnersatz einzufärben. Die optische Kamera dient somit dem Erkennen und Überprüfen von jeglichen Objekten, wobei die entsprechenden Vergleichsinformationen in einer Software hinterlegt sind.

Wie bereits erwähnt, kann die Erkennungsvorrichtung auch verwendet werden, um neben den gewöhnlichen Bearbeitungswerkzeugen auch andere von der Aufnahmevorrichtung aufgreifbare Vorrichtungen zu überprüfen. So wird in vielen Maschinen eine Inspektionsvorrichtung in Form eines Kalibiertasters verwendet, welcher an Stelle eines Bearbeitungswerkzeuges aufgenommen werden kann. Mit Hilfe dieses Kalibriertasters kann die Bearbeitungsvorrichtung kalibriert und der Arbeitsbereich ausgemessen werden. Mit einer erfindungsgemäßen Erkennungsvorrichtung, welche dahingehend optimiert wird, auch Vermessungen durchzuführen, kann auch ein solcher Kalibriertaster auf seine Funktionstauglichkeit und Sauberkeit überprüft werden.

Weiters kann es auch vorgesehen sein, dass die Inspektionsvorrichtung selbst eine optische Erkennungsvorrichtung, wie beispielsweise eine Kamera, ist, mit welcher dann das Werkstück überprüft und unter Umständen vermessen werden kann. Hier kann beispielsweise eine an der Haltevorrichtung angebrachte Referenzierung verwendet werden, um die optische Erkennungsvorrichtung zu kalibrieren.

Gemäß einem bevorzugten Ausführungsbeispiel ist vorgesehen, dass die Vergleichsvorrichtung auch für die Abnützungserkennung eingesetzt werden kann. Durch die Kameraauflösung kann dabei die Genauigkeit eingestellt werden. Je höher nämlich die Auflösung der Kamera ist, desto genauer ist die Abnützungserkennung. Bei Verwendung von Standardkameras (Mikroskopkameras) kann man ca. 0,01 mm genau messen. Daraus wird dann ein Pixelbild erstellt, wobei die Pixel mit den gespeicherten Sollformen verglichen werden und das Bearbeitungswerkzeug bei einer Übereinstimmung von einem frei einstellbaren Prozentwert erkannt wird. Bevorzugt sollte dieser Bereich zwischen 70 % und 99 %, besonders bevorzugt zwischen 88 % und 95 % liegen. Als Schwellwert wird konkret ein Wert von 92 % Pixel-Übereinstimmung gewählt. Mit diesen Mikroskopkameras kann somit ein über 0,04 mm liegender Verschleiß detektiert werden. Dieser Verschleiß kann beispielsweise bei Radien, bei Toren, bei Durchmessern, Winkeln oder Ähnlichem am Bearbeitungswerkzeug/Fräser erkannt werden. Es kann auch die absolute Position der Spindel/ des Fräsers in der Maschine durch die optische Kamera vermessen werden.

Für eine einfache Bedienung und schnelle Erkennung ist bevorzugt eine Anzeigevorrichtung vorgesehen, auf welcher die Abnützung eines in die Aufnahmevorrichtung eingesetzten Bearbeitungswerkzeugs anzeigbar, vorzugsweise über einen dargestellten Balken, ist. Natürlich wäre es alternativ auch denkbar, dass bei einer zu großen Abnützung ein Warnsignal ausgegeben wird oder eine automatische Entsorgung des Bearbeitungswerkzeugs erfolgt, wobei dann angezeigt werden kann, dass ein Ersatzwerkzeug angeschafft werden muss. Es könnten mehrere Ersatzwerkzeuge bereitgehalten werden und bei Bedarf automatisch dem Magazin entnommen werden.

Es ist grundsätzlich möglich, dass nur eine sehr kleine Anzahl an Bearbeitungswerkzeugen verwendet wird. Da aber oftmals sehr viele Bearbeitungsprozesse mit unterschiedlichen Werkzeugen durchgeführt werden müssen, weist die Bearbeitungsvorrichtung bevorzugt ein ganzes Werkzeugmagazin auf, in dem eine Vielzahl von verschiedenen Bearbeitungswerkzeugen und/oder Inspektionsvorrichtungen gelagert bzw. lagerbar ist. Um auch im Bereich dieses Werkzeugsmagazins eine gute Übersicht zu behalten, ist bevorzugt wenigstens eine zweite optische Kamera vorgesehen, durch die die im Werkzeugmagazin gelagerten Bearbeitungswerkzeuge erkennbar, und vorzugsweise deren Position im Werkzeugmagazin, ermittelbar ist. Es kann somit über diese zweite Kamera die Position des Bearbeitungswerkzeugs im Werkzeugmagazin ausgelesen werden und erkannt werden, ob es abgelegt ist oder nicht. Dadurch kann man sich teure optische, kapazitive oder induktive Sensoren sparen. Es kann auch nur eine Kamera für die Werkzeugerkennung in der Aufnahmevorrichtung und im Werkzeugmagazin vorgesehen sein.

Grundsätzlich können die verschiedensten Arten von Bearbeitungsgeräten in die Bearbeitungsvorrichtung eingesetzt werden. Bevorzugt weist aber die Bearbeitungsvorrichtung zumindest eine Bearbeitungsspindel auf, an der die Aufnahmevorrichtung für ein Bearbeitungswerkzeug ausgebildet ist.

Zudem kann bevorzugt vorgesehen sein, dass die Bearbeitungsvorrichtung über eine, vorzugsweise bewegbare, Haltevorrichtung für das dentale Werkstück verfügt.

Um ein möglichst automatisches Arbeiten mit der Bearbeitungsvorrichtung zu ermöglichen, weist diese bevorzugt eine Steuer- oder Regeleinheit auf, über die die zumindest eine optische Kamera steuer- bzw. regelbar ist. Weiters kann vorgesehen sein, dass über die Steuer- oder Regeleinheit auch die zumindest eine Bearbeitungsspindel und die Haltevorrichtung steuer- bzw. regelbar ist. Die Vergleichsvorrichtung kann in die Maschinensoftware integriert sein oder Teil einer separaten Steuerungseinheit sein.

Die gesamte Bearbeitungsvorrichtung ist bevorzugt als eine Industriefräsmaschine und/oder CAD/CAM-Maschine ausgeführt.

Im Folgenden sei beispielhaft ein Prozessablauf für die Arbeit mit einer Bearbeitungsvorrichtung samt Erkennungsvorrichtung geschildert.

Bei einer ersten Variante - die Erkennungsvorrichtung ist nicht in der Lage Vermessungen durchzuführen - wird von der Aufnahmevorrichtung das Bearbeitungswerkzeug aufgenommen und in den Sichtbereich der Erkennungsvorrichtung gefahren. Nachdem das Bearbeitungswerkzeug erkannt worden ist, werden auch die Werte der Achsen gespeichert. Anschließend kann dann die Bearbeitung des Werkstückes durchgeführt werden. Nachdem dies geschehen ist, fährt die Aufnahmevorrichtung wieder in die Erkennungsvorrichtung und bleibt an den zuvor gespeicherten Positions- bzw. Achsenwerten stehen. Dann werden wieder Bilder des Bearbeitungswerkezugs aufgenommen. Wenn diese nicht mit den zuvor aufgenommenen Bildern übereinstimmen, sei es in Bezug auf die Geometrie des Fräsers (beispielsweise auf den Durchmesser oder die Länge), so wird dies über die Software erkannt und es kann eine Fehlermeldung ausgegeben werden. Dies kann dann auf Verschleiß des Bearbeitungswerkzeuges oder sonstige Defekte zurückzuführen sein. Im Falle von Verschleiß kann dies dem Kunden über die Software mitgeteilt werden, sodass dieser ein neues Bearbeitungswerkzeug ablegen kann.

Bei einer zweiten Variante kann auch vorgesehen sein, dass über die Erkennungsvorrichtung direkt eine Vermessung durchgeführt wird. Dies kann so erfolgen, dass der Durchmesser des Bearbeitungswerkzeugs als Referenzmaß angesehen wird. Dieses Maß ist in der Regel sehr genau, da es sich um eine geschliffene Fläche handelt und die Toleranzen im Tausendstel-Millimeter-Bereich liegen. Wenn das Werkzeug dann in den Sichtbereich gefahren ist, können die Achsen so lange verstellt werden, bis der Durchmesser des Bearbeitungswerkzeugs einer genau hinterlegten Pixelanzahl entspricht. Somit kann dann das Bearbeitungswerkzeug vermessen werden. Auch in einem solchen Fall werden die bei der Bildaufnahme vorliegenden Positionsdaten gespeichert und bei einer erneuten Aufnahme wieder an dieselbe Stelle verfahren. Wenn dann die Bilder verglichen werden, kann über die Pixeldifferenz der Fehler berechnet werden.

Zum Erfassen der Länge kann auch auf einen, vorzugsweise mechanischen, Endschalter zurückgegriffen werden. Bevor die Bearbeitungsvorrichtung mit der Bearbeitung beginnt, wird der Endschalter mit der Spitze des Bearbeitungswerkzeuges entlang der Achse angefahren. Bei Kontakt wird dann dieser Wert gespeichert. Somit sind diese Position und die Position bei der Aufnahme der Bilder in der Erkennungsvorrichtung bekannt. Wenn nach der Bearbeitung direkt in die Erkennungsvorrichtung gefahren wird und ein Verschleiß in der Länge vorliegt oder gar ein Bruch, kann dies über die Erkennungsvorrichtung erkannt werden. Alternativ kann auch wieder auf den mechanischen Endschalter gefahren werden. Wenn bis zum Kontakt mit den Achsen mehr Weg verfahren werden muss, dann weiß man, dass sich das Bearbeitungswerkzeug in der Geometrie geändert hat und unter Umständen ein Verschleiß vorliegt. Wird davon ausgegangen, dass die Pixel in ihrer x- und y-Ausrichtung ident sind oder wenn deren Seitenverhältnis bekannt ist, kann auch auf das Anfahren verzichtet werden. Somit kann jedem Pixel ein genau definierter Wert zugeordnet werden oder der Wert kann selbst von der Vorrichtung über ein Referenzmaß ermittelt werden. So entspricht beispielsweise ein Pixel einem Quadrat von 0,01 mm x 0,01 mm.

Bei einer dritten Variante kann aber auch vorgesehen sein, dass die Kennzeichnung mit einer definierten Größe an einer definierten Position auf den Bearbeitungswerkzeugen aufgebracht wird. Das Bearbeitungswerkzeug kann dann in der Erkennungsvorrichtung so lange im Abstand zur optischen Kamera verstellt werden, dass die Kennzeichnung in den Abmessungen oder einer definierten Geometrie einer bestimmten Pixelanzahlt entspricht. Die Anzahl dieser Pixel entspricht dann einem definierten Wert, beispielsweise kann ein Millimeter 100 Pixel entsprechen. Wenn diese Informationen dann von der Erkennungsvorrichtung ermittelt wurden und die Referenzpunkte anhand der Kennzeichnung vorliegen, kann im Weiteren das ganze Bearbeitungswerkzeug vermessen werden. Dafür werden dann nur mehr die Pixel gezählt und in eine Maßeinheit wie Millimeter umgerechnet. Hier hat man einen fixen Bezugspunkt auf dem Bearbeitungswerkzeug, von dem aus dann die weiteren Punkte vermessen werden können. Dieser ist bei jedem Fräser derselbe. Ohne einen solchen Bezugspunkt muss beispielsweise von der Bearbeitungsspitze des Fräsers ausgegangen werden. Sollte diese Spitze jedoch schon bei einem neuen Fräser beschädigt sein, dann ist dies über einen Geometrieabgleich ersichtlich oder die Maschine erkennt, dass in diesem Fall bei der Erstvermessung der Fräser an einer anderen Stelle steht, als er eigentlich sollte. Dies kann jedoch auch der Fall sein, sollte er zu weit aus der Spannzange ragen oder der Fräser durch Fabrikationsfehler kürzer sein. Jedenfalls ergibt sich durch die Kennzeichnung ein definierter Referenzpunkt an einer Stelle, bevorzugt am Schaft, die unter normalen Umständen auch nicht beschädigt werden kann. Von dieser Stelle aus können dann alle Punkte genau erfasst werden, da hinterlegt ist, an welcher Stelle sich die Referenzierung am Bearbeitungswerkzeug befindet. Eine solche Referenzierung kann auch an anderen Elementen als am Bearbeitungswerkzeug selbst angebracht werden. Sie dient rein zur Kalibrierung der optischen Kamera.

Es kann auch vorgesehen sein, dass über die Software erkannt wird, dass es sich bei dem Objekt um einen nicht flachen, sondern beispielsweise um einen runden Körper handelt. Dadurch kann dann dementsprechend die Verzerrung durch den größeren oder kleineren Abstand kompensiert werden.

Optional kann auch vorgesehen sein, dass der Bediener die Bearbeitungswerkzeuge nicht selber im Magazin ablegt, sondern er dieses nur in die Spannzange der Bearbeitungsspindel steckt und dann die Maschine selbst das Werkzeug an der dafür vorgesehenen Position im Werkzeughalter ablegt. Wenn das Werkzeug bei der Aufnahme der Bilder gedreht wird, kann dann auch der Rundlauf bestimmt werden. Sollte das Werkzeug bei den unterschiedlichen Aufnahmen versetzt sein, weiß man, dass der Rundlauf nicht passt und kann auch diesen messen und dann unter Umständen kompensieren.

Ein weiterer Punkt ist, dass neben der Vermessung des Bearbeitungswerkzeugs auch die Schneiden überprüft werden können. Über sonstige Kameraerkennungen kann ein Werkzeug auf Bruch überprüft werden, doch ist es auch möglich, dass ein Bearbeitungswerkzeug nur einen Defekt an der umlaufenden Schneidkante aufweist und nicht im vorderen Bereich. Um solche Fehler erkennen zu können, ist es mit der vorliegenden Bearbeitungsvorrichtung möglich, das Bearbeitungswerkzeug von allen Seiten zu erfassen.

In manchen Fällen kann nicht vermieden werden, dass das Bearbeitungswerkzeug mit einem gewissen Verschmutzungsgrad in den Sichtbereich der optischen Kamera kommt. Bei Verwendung einer Datenmatrix von 18x18 beträgt der Standard für den höchstzulässigen Verschmutzungsgrad 21 % und bei einer 20x20 Datenmatrix 22 %. Durch das redundante Aufbringen einer solchen Kennzeichnung kann der zulässige Verschmutzungsgrad erhöht werden.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: schematisch eine Bearbeitungsvorrichtung,
- Fig. 2a, 2b, 3a, 3b: die Bearbeitungsvorrichtung in 3D-Ansichten,
- Fig. 4: eine Frontansicht einer Haltevorrichtung,
- Fig. 5: eine Seitenansicht einer Haltevorrichtung,
- Fig. 6: eine ausgefahrene Bearbeitungsspindel mit Werkzeugwechsler,
- Fig. 7: eine Sollform und ein Kamerabild im Vergleich,
- Fig. 8: eine perspektivische Ansicht eines Gehäuses der Erkennungsvorrichtung,
- Fig. 9: eine Seitenansicht des Gehäuses der Erkennungsvorrichtung,
- Fig. 10: eine Frontansicht des Gehäuses der Erkennungsvorrichtung,
- Fig. 11: einen Schnitt durch das Gehäuse der Erkennungsvorrichtung,
- Fig. 12: ein Bearbeitungswerkzeug vor dem Einfahren in das Gehäuse der Erkennungsvorrichtung,
- Fig. 13: ein in das Gehäuse der Erkennungsvorrichtung eingefahrenes Bearbeitungswerkzeug
- Fig. 14: ein Bearbeitungswerkzeug mit einem Identifikationsmittel am Schaft und
- Fig. 15 und 16: übertrieben dargestellte Abweichungen des Bearbeitungswerkzeugs von einem Rundlauf.

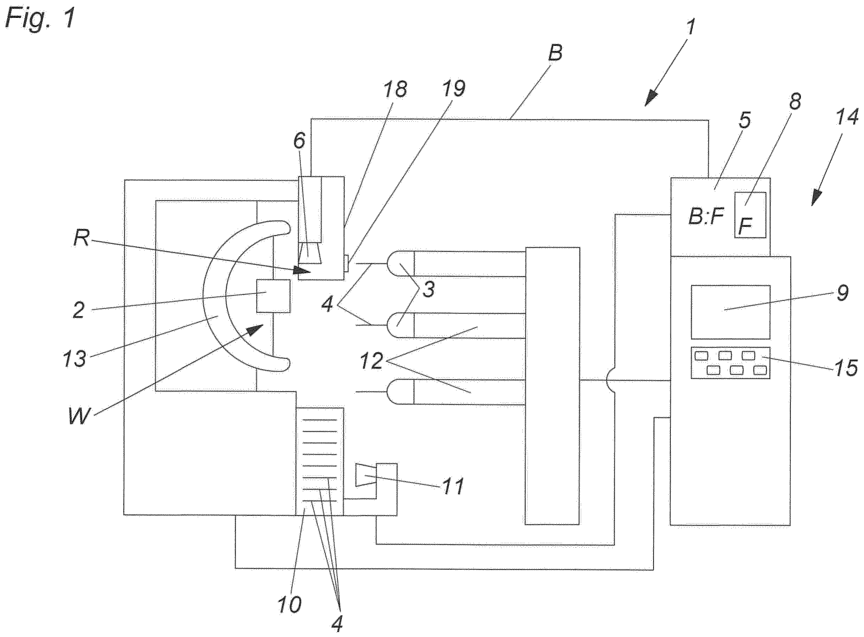

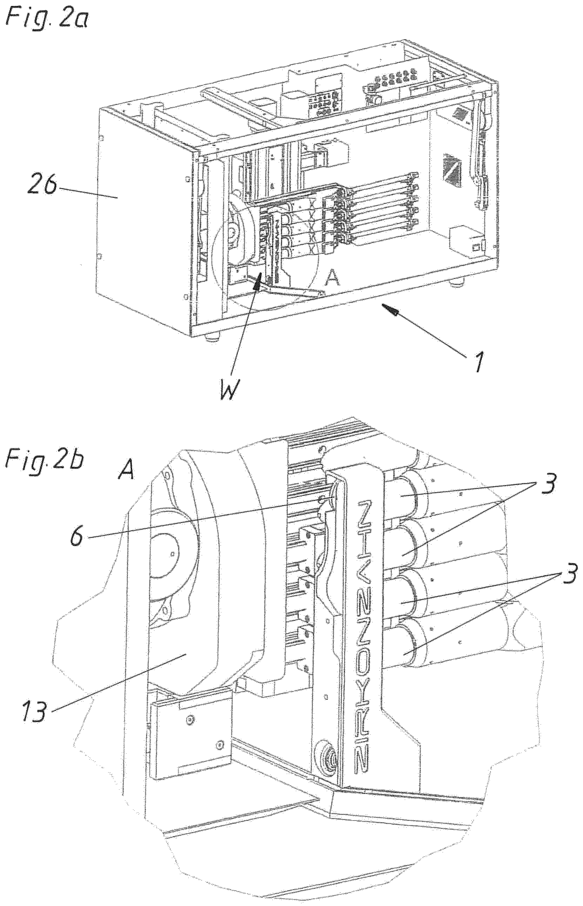

In Fig. 1 ist schematisch eine Bearbeitungsvorrichtung 1 dargestellt. Als wesentliche Teile umfasst diese Bearbeitungsvorrichtung 1 eine, vorzugsweise durch eine nicht dargestellte Antriebsvorrichtung bewegbare, Haltevorrichtung 13 für ein dentales Werkstück 2, die Bearbeitungsspindeln 12 mit Aufnahmevorrichtungen 3 und den Bearbeitungswerkzeugen 4, die optische Kamera 6 und die Erkennungsvorrichtung 5 mitsamt Vergleichsvorrichtung 8. Die Bearbeitung des dentalen Werkstücks 2 erfolgt im Werkstück-Bearbeitungsbereich W der Bearbeitungsvorrichtung 1. Die optische Kamera 6 ist in einem Gehäuse 18 untergebracht. In diesem Gehäuse 18 ist ein vom Werkstück-Bearbeitungsraum W abgetrennter Bildaufnahmeraum R ausgebildet, in welchen die Bearbeitungswerkzeuge 4 über eine verschließbare Öffnung 19 hineinbewegt werden können. Die gesamte Vorrichtung 1 weist auch ein Vorrichtungsgehäuse 26 auf, welches besonders gut in Fig. 2a erkennbar ist. Dieses Vorrichtungsgehäuse 26 begrenzt bzw. umschließt den Werkstück-Bearbeitungsraum W. Grundsätzlich muss für die Bearbeitung des dentalen Werkstückes 2 nur eine Arbeitsspindel 12 mit einem Bearbeitungswerkzeug 4 vorhanden sein. Um aber eine schnellere Bearbeitung zu ermöglichen, sind bevorzugt mehrere Bearbeitungsspindeln 12 vorgesehen. Zudem ist ein Werkzeugmagazin 10 für eine Vielzahl von verschiedenen Bearbeitungswerkzeugen 4 vorgesehen. Dieses Werkzeugmagazin 10 kann von einer zweiten optischen Kamera 11 überwacht werden. Die optische Kamera 6, wie auch die zweite optische Kamera 11, sind Teil der Erkennungsvorrichtung 5, welche wiederum mit der Steuer- oder Regeleinheit 14 verbunden ist. Zudem ist eine Anzeigevorrichtung 9 und eine Tastatur 15 vorgesehen, über die Einstellungen und Parameter verändert werden können. Von der Steuer- oder Regeleinheit 14 werden die Bearbeitungswerkzeuge 4 über die Bearbeitungsspindeln 12 und die Bewegung der Haltevorrichtung 13 mitsamt dentalem Werkstück 2 gesteuert bzw. geregelt. Die Bewegungssteuerung bzw. -regelung erfolgt dabei bevorzugt auch in Abhängigkeit der über die Erkennungsvorrichtung 5 identifizierten Bearbeitungswerkzeuge 4. Anstatt oder zusätzlich zu den Bearbeitungswerkzeugen 4 können auch noch nicht dargestellte Inspektionsvorrichtungen, vorzugsweise in Form einer optischen Kamera oder eines Kalibriertasters, in die Aufnahmevorrichtung 3 eingesetzt werden.

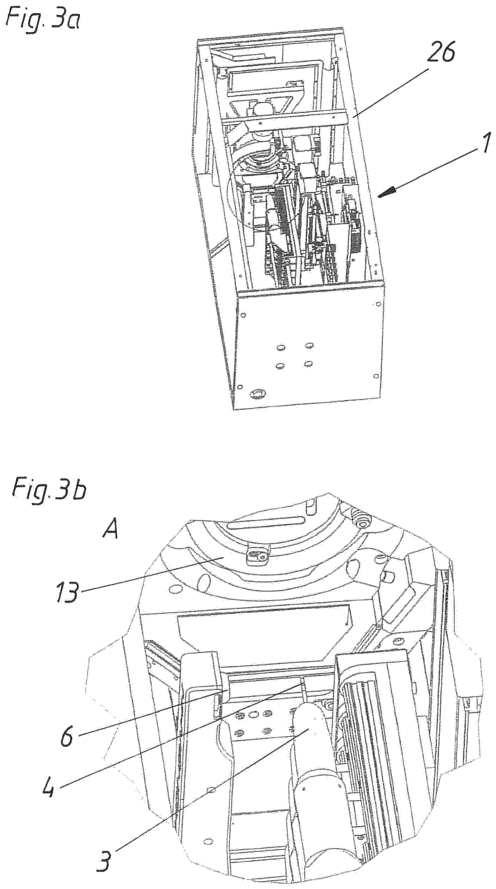

In den Fig. 2a bis 3b sind in 3D-Ansichten als wesentliche Komponenten der Bearbeitungsvorrichtung 1 mehrere, in Aufnahmevorrichtungen 3 von Bearbeitungsspindeln 12 aufgenommene Bearbeitungswerkzeuge 4 und eine optische Kamera 6 erkennbar.

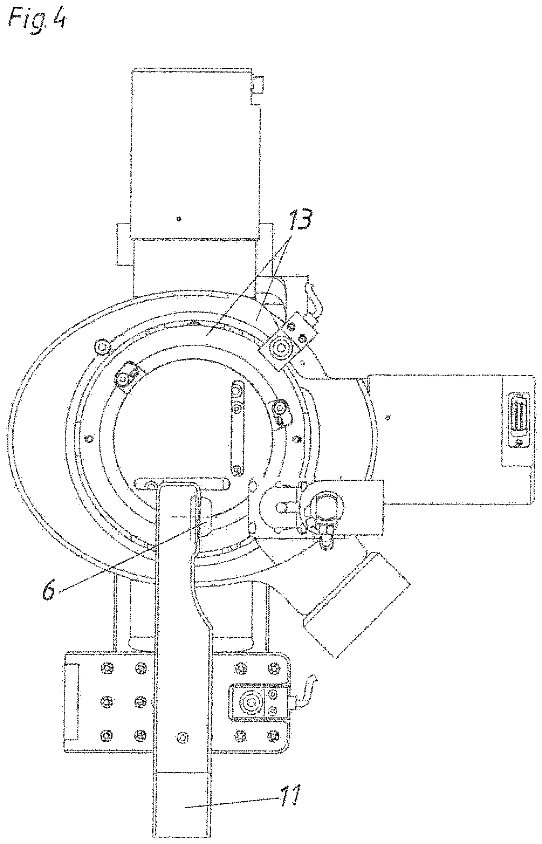

In Fig. 4 ist im Detail erkennbar, wo die optische Kamera 6 angeordnet ist. Beabstandet davon ist die zweite optische Kamera 11 angeordnet. Die optische Kamera 6 ist in Form einer Mikroskopkamera ausgebildet und hat in einer Vermessungsposition des Bearbeitungswerkzeugs 4 bzw. der Bearbeitungsspindel 12 freie Sicht auf das eingesetzte bzw. aufgespannte Bearbeitungswerkzeug 4.

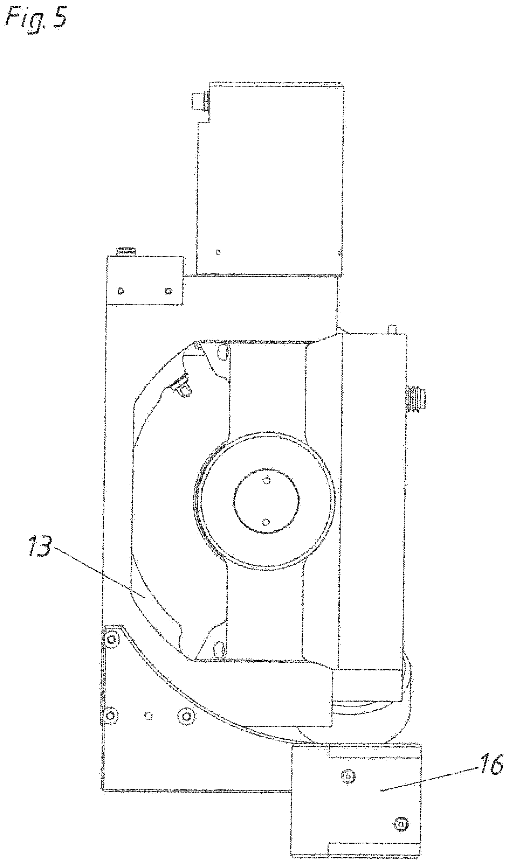

In Fig. 5 ist neben der Haltevorrichtung 13 auch der Werkzeugwechsler 16 ersichtlich.

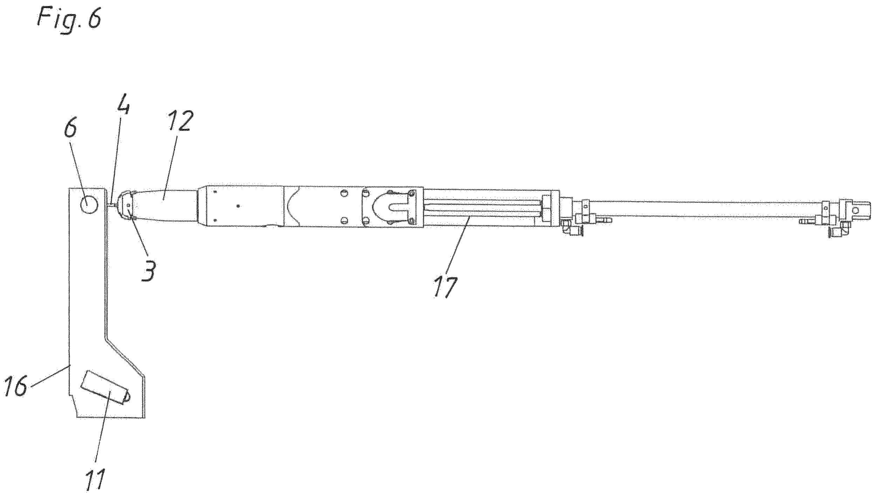

Auch aus Fig. 6 geht ein Werkzeugwechsler 16 hervor, an dem sowohl die zweite optische Kamera 11 als auch die erste optische Kamera 6 angeordnet sind. Die optische Kamera 6 dient zur Werkzeugvermessung und -erkennung. Die Arbeitsspindel 12 ist über die Bewegungsvorrichtung 17 ausgefahren. An der Aufnahmevorrichtung 3 der Bearbeitungsspindel 12 ist ein Bearbeitungswerkzeug 4 eingesetzt. Über das gesamte Kamerasystem kann somit ausgelesen werden, welches Bearbeitungswerkzeug 4 sich in der Aufnahmevorrichtung 3 befindet und wie dessen Zustand ist. Es kann auch ausgelesen werden wie viele Meter das Bearbeitungswerkzeug 4 unter welchen Arbeitsparametern bereits absolviert bzw. durchgeführt hat. Mit den Kameras 6 bzw. 11 können somit alle Bearbeitungswerkzeuge 4, alle gegebenenfalls vorhandenen Werkzeugmagazine 10 und alle Bearbeitungsspindeln 12 überwacht werden.

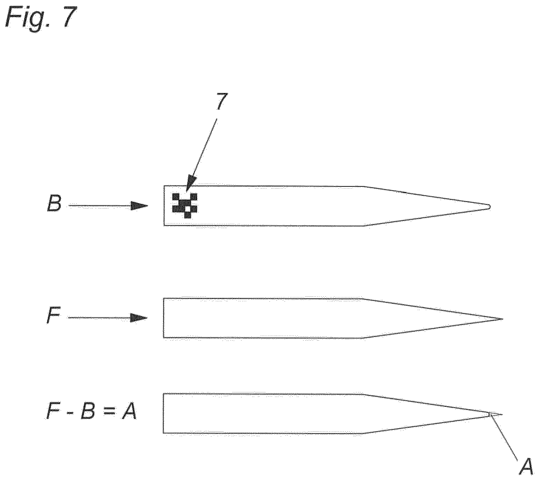

In Fig. 7 in Zusammenschau mit Fig. 1 ist erkennbar, wie die Identifizierung und auch die Abnützungserkennung erfolgt. Die oberste Darstellung von Fig. 7 zeigt ein aufgenommenes Kamerabild B eines Bearbeitungswerkzeuges 4. Dieses Bearbeitungswerkzeug 4 kann entweder in der Aufnahmevorrichtung 3 eingesetzt sein oder im Werkzeugmagazin 10 gelagert sein. Wenn auf dem Bearbeitungswerkzeug 4, wie dargestellt, ein Identifikationsmittel 7 aufgebracht ist, wird nach Übermittlung dieses Kamerabildes B von der optischen Kamera 6 an die Erkennungsvorrichtung 5 mittels hinterlegter Identifikationsmittellisten das Bearbeitungswerkzeug 4 eindeutig identifiziert. Wenn kein solches Identifikationsmittel 7 auf dem Bearbeitungswerkzeug 4 aufgebracht ist, erfolgt die Identifizierung über in der Vergleichsvorrichtung 8 gespeicherten Sollformen F. Wenn das aufgenommene Bild B nur geringfügig von der gespeicherten Sollform abweicht (z.B. Abweichung unter 8% der gesamten Pixel des aufgenommen Bildes B) ist eine eindeutige Identifizierung des Bearbeitungswerkzeugs 4 gegeben. Zusätzlich kann dieser Vergleich des aufgenommenen Bildes B und der Sollform F auch zur Abnützungserkennung dienen. Dazu können bevorzugt vor allem die stark beanspruchten Bereiche des Bearbeitungswerkzeuges 4 separat ausgewertet werden. In dem in Figur 7 dargestellten Fall ist dieser Bereich die Spitze des Bearbeitungswerkzeuges 4. Aus einer Überlagerung der Sollform F und des aufgenommenen Bildes B ist die Abnützung A im Bereich der Spitze erkennbar. Bevorzugt sind separate Schwellwerte hinterlegt, um eine zu hohe Abnützung zu erkennen und gegebenenfalls anzuzeigen. Beispielsweise kann ein entsprechendes Signal ausgegeben werden, wenn im Bereich einer Schneide oder einer Spitze das aufgenommene Bild B von der Sollform F um beispielsweise mehr als 10% abweicht. Dieser Schwellwert ist bevorzugt über die Steuer- oder Regeleinheit 14 einstellbar oder kann bereits zusammen mit der Sollform F hinterlegt sein.

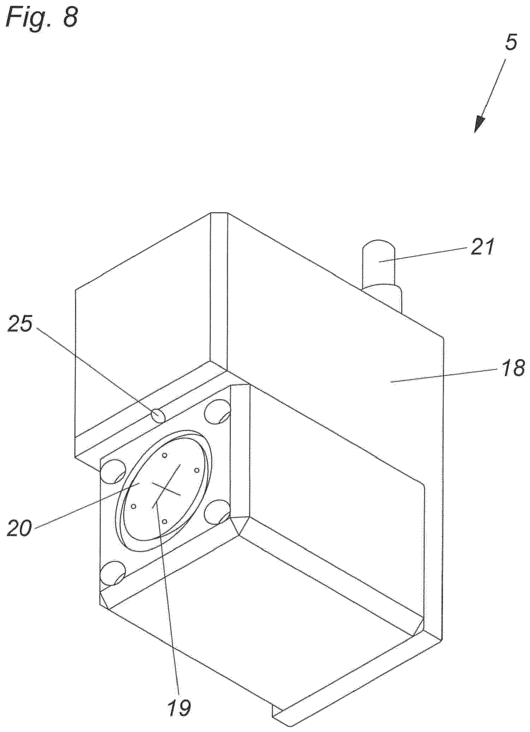

In Fig. 8 ist eine besonders bevorzugte Ausführungsvariante der Erkennungsvorrichtung 5 dargestellt. Demgemäß ist die in dieser Fig. 8 noch nicht erkennbare optische Kamera 6 in einem Gehäuse 18 verbaut. Dieses Gehäuse 18 sollte so an der Bearbeitungsvorrichtung 1 angebracht sein, dass eine Relativbewegung zur Aufnahmevorrichtung 3 möglich ist. Das Innere dieses Gehäuse 18 ist durch eine schließbare Öffnung 19 zugänglich. Die Öffnung 19 kann durch ein Verschlusselement, vorzugsweise einen Schieber oder eine Klappe, verschließbar sein. Im Konkreten ist diese Öffnung 19 Teil einer flexiblen bzw. nachgiebigen Abdeckung 20. Diese flexible Abdeckung 20 ist bevorzugt aus Gummi. Sie bildet eine Art Abstreifer, welcher dafür sorgt, dass kein Schmutz in den Sichtbereich (Bildaufnahmeraum R) der optischen Kamera 6 kommt und auch Schmutz, welcher am Bearbeitungswerkzeug 4 haftet, abgestreift wird. Durch die als zumindest ein schmaler Schlitz, vorzugsweise als zwei schmale Schlitze in X-Form, in der flexiblen Abdeckung 20 ausgebildete Öffnung 19 kann das Bearbeitungswerkzeug 4 in das Gehäuse 18 eingeführt werden. In diesem Fall bilden also die die X-Form der Öffnung 19 bildenden und begrenzenden vier dreieckigen Lappen der flexiblen Abdeckung 20 eine Art bewegbares Verschlusselement. Durch diese verschließbare Öffnung 19 ist im Inneren des Gehäuses 18 eine saubere und schmutzfreie Umgebung geschaffen, um eine sichere Erkennung des Bearbeitungswerkzeugs 4 zu ermöglichen. Auch die später noch beschriebene Öffnung der Druckluftdüse 25 ist in dieser Fig. 8 erkennbar.

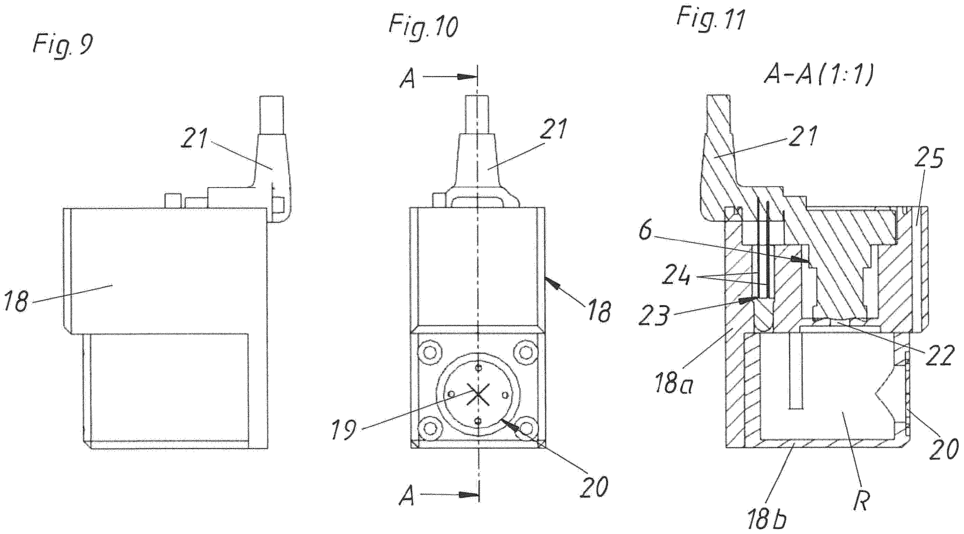

Fig. 9 zeigt das Gehäuse 18 in einer Seitenansicht. Im rechten oberen Bereich ist ein signaltechnischer Anschluss 21 erkennbar, über welchen die optische Kamera 6 mit der Steuer- oder Regeleinheit 14 in Verbindung steht.

Fig. 10 zeigt eine Frontansicht des Gehäuses 18 mit der flexiblen Abdeckung 20 samt verschließbarer Öffnung 19.

In Fig. 11 ist der Schnitt A-A durch das Gehäuse 18 gemäß Fig. 10 dargestellt. Das Gehäuse 18 weist den Gehäusegrundkörper 18a und den Gehäuseaufsatz 18b auf, kann aber grundsätzlich auch einstückig ausgebildet sein. Die flexible Abdeckung 20 begrenzt den Bildaufnahmeraum R im Gehäuse 18 und schützt diesen vor Schmutz. Am bzw. im Gehäuse 18 ist auch die optische Kamera 6 angebracht. Diese optische Kamera 6 ist in den Bildaufnahmeraum R gerichtet. Über die Öffnung 22 im Gehäusegrundkörper 18a "blickt" die optische Kamera 6 in den Bildaufnahmeraum R. Bei der optischen Kamera 6 wird bevorzugt eine monochrome Industriekamera verwendet, welche über einen Fixfokus oder auch über einen justierbaren Fokus verfügen kann. Um für die optimalen Lichtverhältnisse im Bildaufnahmeraum R zu sorgen, ist im Gehäuse 18 zumindest eine Lichtquelle 23 untergebracht. Bevorzugt ist diese Lichtquelle 23 als LED ausgeführt. Diese wird über die Leitungen 24 und den Anschluss 21 mit Strom versorgt. Es können auch andere oder mehrere Positionen für die zumindest eine Lichtquelle 23 vorgesehen sein. Die Lichtquelle 23 kann auch mit einem milchigen Glas abgedeckt sein, um eine diffuse Lichteinstrahlung zu erzeugen. Idealerweise verfügt die Erkennungsvorrichtung 5 auch über einen Druckluftanschluss (nicht dargestellt), damit das Bearbeitungswerkzeug 4 vor der Kontrolle nochmal gereinigt wird. Ausgehend von diesem Druckluftanschluss wird Druckluft über die im Gehäuse 18 ausgebildete Druckluftdüse 25 ausgebracht. Die Öffnung dieser Druckluftdüse 25 sollte über dem Abstreifer (flexible Abdeckung 20) positioniert sein, damit hier schon der gröbste Schmutz vom Bearbeitungswerkzeug 4 abgeblasen wird.

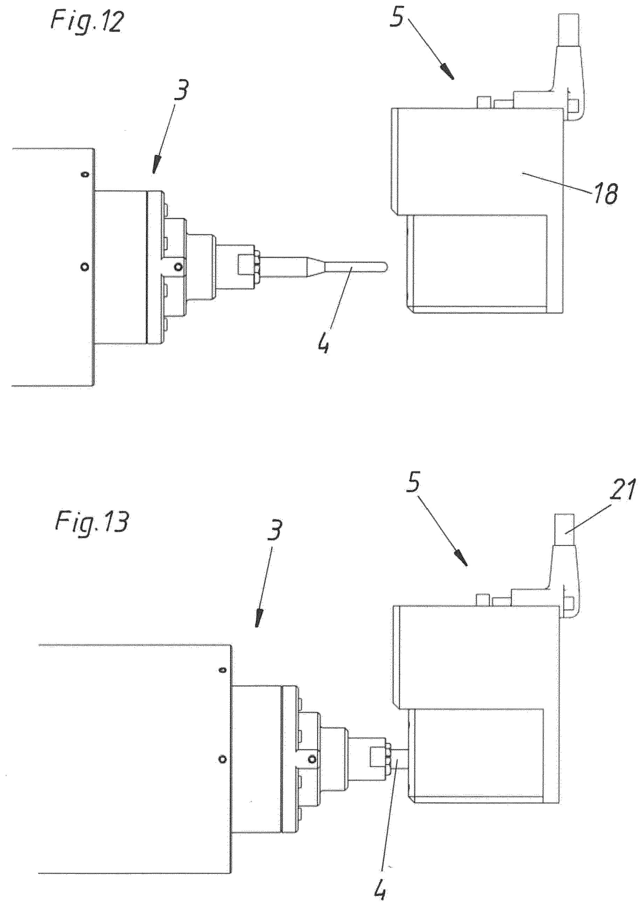

In Fig. 12 ist auf der linken Seite eine Aufnahmevorrichtung 3 samt Bearbeitungswerkzeug 4 dargestellt. Rechtsseitig ist das Gehäuse 18 der Erkennungsvorrichtung 5 dargestellt. Das Bearbeitungswerkzeug 4 ist noch nicht in das Gehäuse 18 eingefahren.

Demgegenüber ist in Fig. 13 der Großteil des Bearbeitungswerkzeugs 4 in den Bildaufnahmeraum R des Gehäuses 18 eingefahren. Dadurch kann das Bearbeitungswerkzeug 4 im von der Umgebung abgetrennten Bildaufnahmeraum R von der optischen Kamera 6 aufgenommen werden, woraufhin die entsprechenden Auswertungen über die Erkennungsvorrichtung 5 durchgeführt werden können.

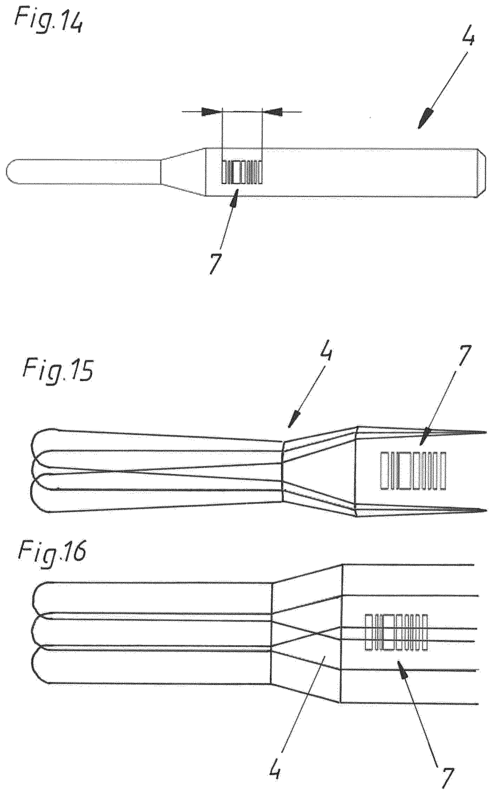

Fig. 14 zeigt ein Bearbeitungswerkzeug 4. Im Bereich des Schaftes ist eine Kennzeichnung (Identifikationsmittel 7) aufgebracht. In diesem Fall weist diese eine konkrete Länge von 5 mm auf. Natürlich kann diese Kennzeichnung aber auch größer oder kleiner sein. Durch eine solche Kennzeichnung ergibt sich eine Referenzpunkt an einer Stelle, die unter normalen Umständen auch nicht beschädigt werden kann.

In den Fig. 15 und 16 ist - übertrieben - dargestellt, dass über das am Schaft des Bearbeitungswerkzeugs 4 angebrachte Identifikationsmittel 7 auch der Rundlauf des Bearbeitungswerkzeugs 4 überprüft bzw. bestimmt werden kann. Die in Fig. 15 dünner dargestellten Linien zeigen eine Taumelbewegung des Bearbeitungswerkzeugs 4. Eine solche kann auftreten, wenn das Bearbeitungswerkzeug 4 schräg in die Aufnahmevorrichtung 3 eingesetzt ist oder wenn sich Schmutz zwischen dem Bearbeitungswerkzeug 3 und der Aufnahmevorrichtung 4 befindet. In Fig. 16 ist durch die dünnen Linien eine exzentrische Bewegung des Bearbeitungswerkzeugs 4 angedeutet. Wenn eine Abweichung vom idealen Rundlauf durch die Erkennungsvorrichtung 5 erkannt wird, kann eine entsprechende Reaktion ausgegeben werden. Z. B. kann eine Kompensation veranlasst oder eine Warnung ausgegeben werden.

Es ist somit durch die vorliegende Erfindung eine Kameraüberwachung für eine Bearbeitungsvorrichtung 1 (CAD/CAM-Maschine) beschrieben, mit der ausgelesen bzw. erkannt werden kann, ob ein Bearbeitungswerkzeug 4 in einem Werkzeugmagazin 10 abgelegt oder in der Aufnahmevorrichtung 3 einer Bearbeitungsspindel 12 eingesetzt ist und welches Bearbeitungswerkzeug 6 gerade eingesetzt ist (über Geometrie/Sollform oder über eine Markierung). Zusätzlich kann über die optische Kamera 6 die Abnützung oder Beschädigung des Bearbeitungswerkzeuges 4 überwacht werden. Zudem kann - sozusagen zur doppelten Sicherheit - berechnet bzw. ermittelt werden, wie lange der bereits gefräste Weg des Bearbeitungswerkzeugs 4 ist. Dazu wird zu jedem Bearbeitungswerkzeug 4 immer der absolvierte bzw. zurückgelegte Weg aufgrund der Achsbewegungen abgespeichert.

## Patentansprüche

1. Bearbeitungsvorrichtung (1) für ein, insbesondere dentales, Werkstück (2), mit
- zumindest einer Aufnahmevorrichtung (3) für eine Inspektionsvorrichtung oder ein Bearbeitungswerkzeug (4) zum Bearbeiten des, insbesondere dentalen, Werkstücks (2) und
- einer Erkennungsvorrichtung (5) zum Vermessen und/oder Identifizieren eines in die Aufnahmevorrichtung (3) eingesetzten Bearbeitungswerkzeugs (4) oder der Inspektionsvorrichtung,
wobei die Erkennungsvorrichtung (5) zumindest eine optische Kamera (6) aufweist, **dadurch gekennzeichnet, dass** die Erkennungsvorrichtung (5) ein Gehäuse (18) aufweist, in welchem ein von einem Werkstück-Bearbeitungsraum (W) der Bearbeitungsvorrichtung (1) abgetrennter Bildaufnahmeraum (R) ausgebildet ist, wobei das Gehäuse (18) eine verschließbare Öffnung (19) aufweist, durch welche das Bearbeitungswerkzeug (4) oder die Inspektionsvorrichtung in den Bildaufnahmeraum (R) im Gehäuse (18) einfahrbar ist.

2. Bearbeitungsvorrichtung nach Anspruch 1, **dadurch gekennzeichnet, dass** die Bearbeitungsvorrichtung ein Bearbeitungswerkzeug (4) aufweist, auf dem Identifikationsmittel (7) zur eindeutigen Identifizierung des Bearbeitungswerkzeugs (4) oder der Inspektionsvorrichtung angeordnet, vorzugsweise aufgelasert, sind.

3. Bearbeitungsvorrichtung nach Anspruch 2, **dadurch gekennzeichnet, dass** die Identifikationsmittel (7) in Form von QR-Codes, einer Zahlenfolge, einer Seriennummer, eines 1D-Strichcodes, eines 2D-Strichcodes oder einer Datenmatrix ausgebildet sind.

4. Bearbeitungsvorrichtung nach Anspruch 1, **dadurch gekennzeichnet, dass** die Erkennungsvorrichtung (5) eine Vergleichsvorrichtung (8) aufweist, in der Sollformen (F) einer Vielzahl von Bearbeitungswerkzeugen (4) und/oder Inspektionsvorrichtungen gespeichert sind.

5. Bearbeitungsvorrichtung nach Anspruch 4, **dadurch gekennzeichnet, dass** durch die optische Kamera (6) zumindest ein Bild (B) eines in die Aufnahmevorrichtung (3) eingesetzten Bearbeitungswerkzeugs (4) aufnehmbar ist und dieses Bild (B) signaltechnisch der Vergleichsvorrichtung (8) zuführbar ist.

6. Bearbeitungsvorrichtung nach Anspruch 5, **dadurch gekennzeichnet, dass** von der Vergleichsvorrichtung (8) das aufgenommene Bild (B) mit zumindest einer der Sollformen (F) vergleichbar ist, wobei bei Übereinstimmung des aufgenommenen Bildes (B) mit einer Sollform (F) das Bearbeitungswerkzeug (4) durch die Erkennungsvorrichtung (5) eindeutig identifizierbar ist.

7. Bearbeitungsvorrichtung nach einem der Ansprüche 1 bis 6, **dadurch gekennzeichnet, dass** durch die Erkennungsvorrichtung (5), vorzugsweise durch deren Vergleichsvorrichtung (8), auch die Abnützung (A) eines Bearbeitungswerkzeugs (4) durch Vergleich eines Bilds (B) des Bearbeitungswerkzeugs (4) mit einer gespeicherten Sollform (F) messbar ist.

8. Bearbeitungsvorrichtung nach einem der Ansprüche 1 bis 7, **gekennzeichnet durch** wenigstens ein Werkzeugmagazin (10), in dem eine Vielzahl von verschiedenen Bearbeitungswerkzeugen (4) oder Inspektionsvorrichtungen lagerbar ist.

9. Bearbeitungsvorrichtung nach Anspruch 8, **gekennzeichnet durch** wenigstens eine zweite optische Kamera (11), durch die die im Werkzeugmagazin (10) gelagerten Bearbeitungswerkzeuge (4) oder Inspektionsvorrichtungen erkennbar und deren Position im Werkzeugmagazin (10) ermittelbar ist.

10. Bearbeitungsvorrichtung nach einem der Ansprüche 1 bis 9, **dadurch gekennzeichnet, dass** die optische Kamera (6) im oder am Gehäuse (18) angeordnet ist und in den Bildaufnahmeraum (R) gerichtet ist.

11. Bearbeitungsvorrichtung nach einem der Ansprüche 1 bis 10, **dadurch gekennzeichnet, dass** die Bearbeitungsvorrichtung (1) ein Vorrichtungsgehäuse (26) aufweist, welches den Werkstück-Bearbeitungsraum (W) und die optische Kamera (6) samt Gehäuse (18) umschließt.

12. Bearbeitungsvorrichtung nach einem der Ansprüche 1 bis 11, **dadurch gekennzeichnet, dass** im oder am Gehäuse (18) eine Luftdruckdüse (25) angeordnet ist.

13. Bearbeitungsvorrichtung nach Anspruch 12, **dadurch gekennzeichnet, dass** die Luftdruckdüse (25) auf die Öffnung (19) und/oder auf einen Bereich vor der Öffnung (19) gerichtet ist.

## Claims

1. A processing device (1) for an in particular dental workpiece (2) comprising
- at least one receiving device (3) for an inspection device or a processing tool (4) for processing the in particular dental workpiece (2), and
- a detection device (5) for measuring and/or identifying a processing tool (4) fitted into the receiving device (3) or the inspection device,
wherein the detection device (5) has at least one optical camera (6), **characterised in that** the detection device (5) has a housing (18) in which there is provided an image recording chamber (R) separated from a workpiece processing chamber (W) of the processing device (1), wherein the housing (18) has a closable opening (19) through which the processing tool (4) or the inspection device can be introduced into the image recording chamber (R) in the housing.

2. A processing device according to claim 1 **characterised in that** the processing device has a processing tool (4), on which identification means (7) for uniquely identifying the processing tool (4) or the inspection device are arranged, preferably lasered.

3. A processing device according to claim 2 **characterised in that** the identification means (7) are in the form of QR codes, a sequence of numbers, a serial number, a 1D bar code, a 2D bar code or a data matrix.

4. A processing device according to claim 1 **characterised in that** the detection device (5) has a comparison device (8) in which reference shapes (F) of a plurality of processing tools (4) and/or inspection devices are stored.

5. A processing device according to claim 4 **characterised in that** at least one image (B) of a processing tool (4) fitted into the receiving device (3) can be recorded by the optical camera (6) and said image (B) can be fed in signal-transmitting relationship to the comparison device (8).

6. A processing device according to claim 5 **characterised in that** the recorded image (B) can be compared to at least one of the reference shapes (F) by the comparison device (8), wherein if the recorded image (B) is coincident with a reference shape (F) the processing tool (4) can be uniquely identified by the detection device (5).

7. A processing device according to one of claims 1 to 6 **characterised in that** the wear (A) of a processing tool (4) can be measured by the detection device (5), preferably by the comparison device (8) thereof, by comparing an image (B) of the processing tool (4) to a stored reference shape (F).

8. A processing device according to one of claims 1 to 7 **characterised by** at least one tool magazine (10) in which a plurality of different processing tools (4) or inspection devices can be stored.

9. A processing device according to claim 8 **characterised by** at least a second optical camera (11) by which the processing tools (4) stored in the tool magazine (10) or inspection devices can be detected and the position thereof in the tool magazine (10) can be ascertained.

10. A processing device according to one of claims 1 to 9 **characterised in that** the optical camera (6) is arranged in or at the housing (18) and is directed into the image recording chamber (R).

11. A processing device according to one of claims 1 to 10 **characterised in that** the processing device (1) has a device housing (26) which encloses the workpiece processing chamber (W) and the optical camera (6) together with housing (18).

12. A processing device according to one of claims 1 to 11 **characterised in that** an air pressure nozzle (25) is arranged in or at the housing (18).

13. A processing device according to claim 12 **characterised in that** the air pressure nozzle (25) is directed on to the opening (19) and/or on to a region in front of the opening (19).

## Revendications

1. Dispositif d'usinage (1) pour une pièce (2), en particulier dentaire, avec
- au moins un dispositif de logement (3) pour un dispositif d'inspection ou un outil d'usinage (4) servant à usiner la pièce (2), en particulier dentaire, et
- un dispositif d'identification (5) servant à mesurer et/ou à identifier un outil d'usinage (4) inséré dans le dispositif de logement (3) ou le dispositif d'inspection,
dans lequel le dispositif d'identification (5) présente au moins une caméra (6) optique, **caractérisé en ce que** le dispositif d'identification (5) présente un boîtier (18), dans lequel est réalisé un espace d'enregistrement d'images (R) séparé d'un espace d'usinage de pièce (W) du dispositif d'usinage (1), dans lequel le boîtier (18) présente une ouverture (19) pouvant être fermée, par laquelle l'outil d'usinage (4) ou le dispositif d'inspection peut être rentré dans l'espace d'enregistrement d'images (R) dans le boîtier (18).

2. Dispositif d'usinage selon la revendication 1, **caractérisé en ce que** le dispositif d'usinage présente un outil d'usinage (4), sur lequel sont disposés, de préférence sont appliqués au laser, des moyens d'identification (7) servant à identifier clairement l'outil d'usinage (4) ou le dispositif d'inspection.

3. Dispositif d'usinage selon la revendication 2, **caractérisé en ce que** les moyens d'identification (7) sont réalisés sous la forme d'un code QR, d'une série de chiffres, d'un numéro de série, d'un code à barres 1D, d'un code à barres 2D ou d'une matrice de données.

4. Dispositif d'usinage selon la revendication 1, **caractérisé en ce que** le dispositif d'identification (5) présente un dispositif de comparaison (8), dans lequel des formes théoriques (F) d'une pluralité d'outils d'usinage (4) et/ou de dispositifs d'inspection sont mémorisées.

5. Dispositif d'usinage selon la revendication 4, **caractérisé en ce qu'**au moins une image (B) d'un outil d'usinage (4) inséré dans le dispositif de logement (3) peut être enregistrée par la caméra (6) optique et ladite image (B) peut être amenée selon une technique de signalisation au dispositif de comparaison (8).

6. Dispositif d'usinage selon la revendication 5, **caractérisé en ce que** l'image (B) enregistrée peut être comparée à au moins une des formes théoriques (F) par le dispositif de comparaison (8), dans lequel en cas de concordance de l'image (B) enregistrée avec une forme théorique (F), l'outil d'usinage (4) peut être identifié clairement par le dispositif d'identification (5).

7. Dispositif d'usinage selon l'une quelconque des revendications 1 à 6, **caractérisé en ce que** l'usure (A) d'un outil d'usinage (4) peut être mesurée également grâce à la comparaison d'une image (B) de l'outil d'usinage (4) à une forme théorique (F) mémorisée par le dispositif d'identification (5), de préférence par son dispositif de comparaison (8).

8. Dispositif d'usinage selon l'une quelconque des revendications 1 à 7, **caractérisé par** au moins un magasin d'outils (10), dans lequel une pluralité de différents outils d'usinage (4) ou de dispositifs d'inspection peut être stockée.

9. Dispositif d'usinage selon la revendication 8, **caractérisé par** au moins une deuxième caméra (11) optique, par laquelle les outils d'usinage (4) stockés dans le magasin d'outils (10) ou les dispositifs d'inspection peuvent être identifiés et dont la position peut être déterminée dans le magasin d'outils (10).

10. Dispositif d'usinage selon l'une quelconque des revendications 1 à 9, **caractérisé en ce que** la caméra (6) optique est disposée dans ou sur le boîtier (18) et est dirigée dans l'espace d'enregistrement d'images (R).

11. Dispositif d'usinage selon l'une quelconque des revendications 1 à 10, **caractérisé en ce que** le dispositif d'usinage (1) présente un boîtier de dispositif (26), lequel renferme l'espace d'usinage de pièce (W) et la caméra (6) optique y compris le boîtier (18).

12. Dispositif d'usinage selon l'une quelconque des revendications 1 à 11, **caractérisé en ce qu'**une buse de pression d'air (25) est disposée dans ou au niveau du boîtier (18).

13. Dispositif d'usinage selon la revendication 12, **caractérisé en ce que** la buse de pression d'air (25) est dirigée sur l'ouverture (19) et/ou sur une zone devant l'ouverture (19).
